# EUROPÄISCHE PATENTSCHRIFT

(11) **EP 0 611 898 B1**
(45) Veröffentlichungstag und Bekanntmachung des Hinweises auf die Patenterteilung: **26.05.1999**
(21) Anmeldenummer: 94101675.0
(22) Anmeldetag: 04.02.1994
(51) Int. Cl.: F16D 41/06, F16D 41/07

(54) **Rollen- oder Klemmkörperfreilauf mit einem Kunststoffkäfig**
Wedging roller or spray-free wheel with a plastic cage
Roue libre à rouleau ou béquille de coincement avec une cage en plastique

(30) Priorität: 18.02.1993 DE 4304936
(43) Veröffentlichungstag der Anmeldung: 24.08.1994
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE S. A., 92506 Rueil-Malmaison (FR)
(72) Erfinder: Premiski, Vladimir, D-53909 Zülpich (DE); Silk, Mark, D-50767 Köln (DE); Wehren, Wilhelm, D-50171 Kerpen (DE)
(74) Vertreter: Messulam, Alec Moses

(56) Entgegenhaltungen:
- EP-A- 0 240 847
- EP-A- 0 291 550
- EP-A- 0 370 119
- DE-A- 2 164 097
- US-A- 4 787 490
- US-A- 5 046 229

## Beschreibung

Die Erfindung bezieht sich auf einen Rollen- oder Klemmkörperfreilauf mit einem Kunststoffkäfig, der im Oberbegriff des Patentanspruches erläuterten Art.

Aus der EP-A-291 550 ist ein Rollen- oder Klemmkörperfreilauf mit einem Kunststoffkäfig bekannt, der über an einem Bord vorgesehene radiale Rastnasen in einer entsprechenden Rastnut in einem Außenlaufring axial fixiert ist und an zumindest einer Seite mit einem metallischen Stützring mit U-förmigen Querschnitt verbunden ist, der den Außenlaufring gegenüber dem Innenlaufring zentriert und gleitgelagert abstützt. Der metallische Stützring ist hierbei an seiner Basis mit einer Anzahl von axialen Öffnungen versehen, in die eine entsprechende Anzahl von axial vorragenden Zapfen des benachbarten Kunststoffkäfigs einragen.

Die axialen Öffnungen und die axial vorragenden Zapfen bilden hierbei Schnappverbindungen, die für besondere, schwierige Anwendungsfälle nur eine unzureichende Befestigung ergeben.

Aus der US-A-5 046 229 ist ein Rollenfreilauf bekannt, bei dem ein metallischer Stützring an seiner Basis mit einer Anzahl von axialen Öffnungen versehen ist, in die axial vorragende Zapfen des benachbarten Bordes des Kunststoffkäfigs einragen und wobei zwischen den Öffnungen und den Zapfen eine feste Verbindung hergestellt wird.

Über die Ausbildung dieser festen Befestigung und deren Tragfähigkeit wird hierbei nichts weiter erläutert.

Aus der DE-A-2 164 097 ist eine Klemmrollen-Freilaufkupplung bekannt, bei der ein korbförmiger Käfigbauteil aus Kunststoff durch einen Deckelteil aus Kunststoff geschlossen wird und beide Teile durch z.B. thermisches Verschweißen miteinander fest verbunden werden.

Diese bekannte Klemmrollen-Freilaufkupplung weist den Nachteil auf, daß der Kunststoffkäfig nicht mit metallischen Stützringen verbunden ist, die den Außenlaufring gegenüber dem Innenlaufring zentrieren und gleitgelagert abstützen.

Aus DE-U-87 00 999 ist ein Rollenwälzlager mit einem sogenannten Kammkäfig aus Kunststoff bekannt, bei dem an den Reihenenden der Stege des Kammkäfigs Nietzapfen ausgebildet sind, die in entsprechenden Öffnungen in einer Abschlußscheibe einragen und die dort durch Warmverformung niedergeschmolzen werden.

Bei dieser bekannten Wälzlageranordnung schließt diese Abschlußscheibe nur die einseitig offene Seite des Kammkäfigs ab und bildet keinen zusätzlichen metallischen Stützring zum Abstützen und Zentrieren eines Außenlaufringes auf einem Innenlaufring.

Die Aufgabe der Erfindung ist es, einen Rollen- oder Klemmkörperfreilauf mit einem Kunststoffkäfig, der im Oberbegriff des Patentanspruches erläuterten Art derart zu verbessern, daß nur ein seitlicher metallischer Stützring derart fest mit dem Kunststoffkäfig verbunden werden kann, daß die erwünschte Zentrier- und Gleitlagerfunktion von diesem einen metallischen Stützring übernommen werden kann.

Die Erfordernis, nur einen metallischen Stützring anzuordnen, ergibt sich unter Umständen aus den sehr beengten Platzverhältnissen innerhalb eines automatischen Getriebes in dem solche Rollen- oder Klemmkörperfreiläufe zur Anwendung kommen. Gemäß der Erfindung wird diese Aufgabe gelöst, indem bei einem Rollen- oder Klemmkörperfreilauf mit einem Kunststoffkäfig, der im Oberbegriff des Patentanspruches erläuterten Art, die im Kennzeichenteil des Patentanspruches aufgezeigten Merkmale angewendet werden.

Dadurch, daß nur ein seitlicher, metallischer Stützring mit dem Kunststoffkäfig verbunden ist und die Öffnungen in der Basis des metallischen Stützringes entweder mit einer Ansenkung oder einer vorgelagerten Einprägung versehen sind, wird zwischen dem metallischen Stützring und dem Kunststoffkäfig eine derart formschlüssige und feste Verbindung erzielt, daß auch bei nur einseitiger Anordnung eines metallischen Stützringes die erwünschte Zentrierung erzielt wird.

Die Erfindung wird anhand zweier in den Zeichnungen gezeigte Ausführungsbeispiele näher erläutert. Es zeigt:
- Fig. 1: einen vertikalen Teilschnitt durch einen Rollen- oder Klemmkörperfreilauf mit einem Kunststoffkäfig gemäß der Erfindung;
- Fig. 2: eine Teilansicht des Rollen- oder Klemmkörperfreilaufes in Richtung-des Pfeiles II in Fig. 1;
- Fig. 3: eine vergrößerte Schnittdarstellung des Verbindungsbereiches Z in Fig. 1 und
- Fig. 4: eine andere Ausführungsform des Verbindungsbereiches.

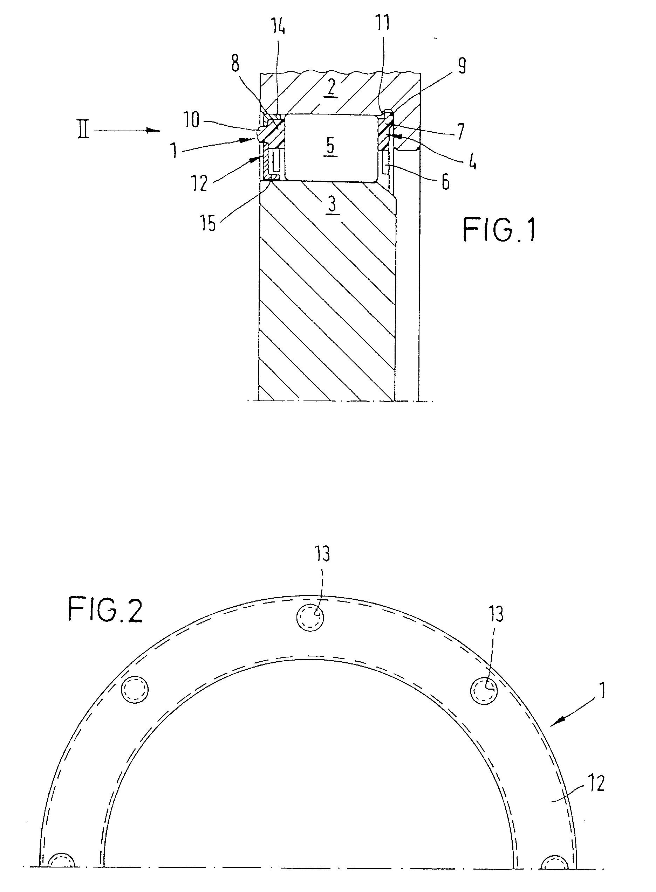

In den Figuren 1 und 2 ist die Anordnung eines Rollen- oder Klemmkörperfreilaufes 1 zwischen einem Außenlaufring 2 und einem Innenlaufring 3 in Teilschnitt gezeigt.

Der Rollen- oder Klemmkörperfreilauf 1 besteht im wesentlichen aus einem Kunststoffkäfig 4, der in entsprechenden Taschen (nicht gezeigt) eine Vielzahl von Rollen- oder Klemmkörpern 5 aufnimmt, die durch einen metallischen inneren Käfig oder eine Federanordnung 6 zusätzlich abgestützt werden.

Der Kunststoffkäfig 4 weist Seitenborde 7 und 8 auf, wobei am Außenumfang des einen Seitenbordes 7 Rastnasen 9 ausgebildet sind und am anderen Seitenbord 8 axial vorspringende Zapfen 10 vorgesehen sind.

Die radial vorspringenden Rastnasen 9 wirken mit einer entsprechenden Rastnut 11 im Außenlaufring 2 axial fixierend zusammen.

Der andere Bord 8 des Kunststoffkäfigs 4 wird von einem metallischen Stützring 12 mit U-förmigen Querschnitt übergriffen, der in seiner Basis mit einer Anzahl von axialen Öffnungen 13 versehen ist und der sich mit seinen abgewinkelten Schenkeln 14 und 15 einerseits am Außenlaufring 2 und andererseits am Innenlaufring 3 gleitgelagert abstützt.

Die Öffnungen 13 im metallischen Stützring 12 nehmen die axial vorspringenden Zapfen 10 auf und das Material der Zapfen wird durch Einwirken eines Ultraschallschweißkopfes oder dergleichen zu Köpfchen verschmolzenen.

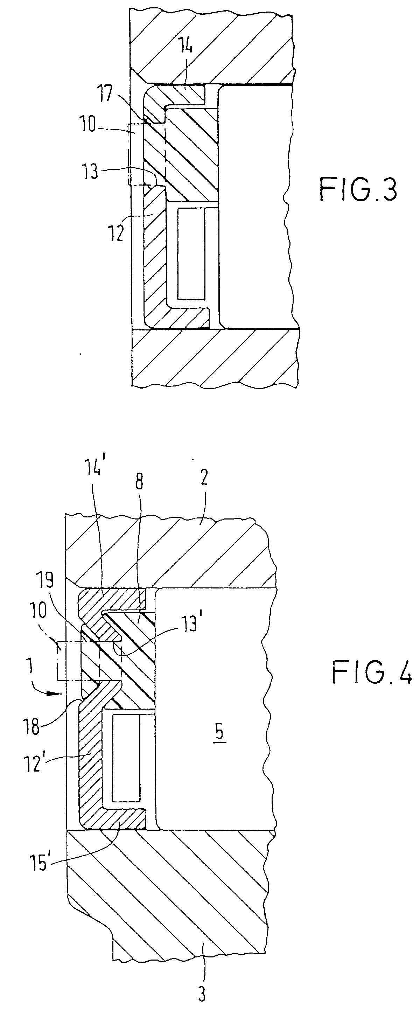

Die Öffnungen 13 im metallischen Stützring 12 können auch, siehe Fig. 3, mit einer Ansenkung 17 versehen sein, um das Material der Zapfen 10 flächenbündig aufzunehmen.

Der metallische Stützring mit U-förmigem Querschnitt kann in bekannter Weise aus einem Eisenwerkstoff bestehen, das auf einer Seite mit einer Gleitlagerlegierung plattiert ist, so daß die abgewinkelten Schenkel 14 und 15 entsprechende Gleitlagerabstützungen für den Außenlaufring 2 und den Innenlaufring 3 bereitstellen.

In der Fig. 4 ist eine weitere Ausführungsform des Verbindungsbereiches zwischen dem metallischen Stützring und dem Kunststoffkäfig gezeigt. Da die meisten Bauteile unverändert beibehalten werden, sind diese mit den gleichen Bezugszeichen wie in den Figuren 1 bis 3 versehen. Lediglich der geänderte metallische Stützring ist mit seinen zugehörenden Teilen mit Bezugszeichen mit hinzugefügtem Strich- Index versehen.

Der metallische Stützring 12' mit U-förmigem Querschnitt weist wieder in seiner Basis eine Anzahl von Öffnungen 13' auf, die jedoch am Grund einer Einprägung 18 ausgebildet sind. Dadurch kann im Gegensatz zu der Ausführungsform in Fig. 3 eine spanabhebende Bearbeitung des metallischen Stützringes 12' vermieden werden und die erforderlichen Öffnungen 13' und die Einsenkung 18 können unmittelbar beim Stanz- oder Ziehvorgang während der Herstellung des metallischen Stützringes 12' hergestellt werden.

Die Verbindung zwischen dem Kunststoffkäfig 4 und dem metallischen Stützring 12' erfolgt wieder in der Weise, daß die axial vorspringenden Zapfen 10 am Bord 8 des Kunststoffkäfigs 4 in die entsprechenden Öffnungen 13' im metallischen Stützring 12' eingeführt werden und darauf folgend mit einem Ultraschallschweißkopf oder dergleichen so weit niedergeschmolzen werden, daß sie die Einsenkung 18 weitgehend ausfüllen. So kann ein kräftigerer Veranke. rungskopf 19 ausgebildet werden, der dennoch flächenbündig liegt.

## Patentansprüche

1. Rollen- oder Klemmkörperfreilauf mit einem Kunststoffkäfig (4), der über an einem Bord (7) vorgesehenen radialen Rastnasen (9) in einer entsprechenden Rastnut (11) in einem Aussenlaufring (2) axial fixiert ist und an einer Seite mit einem metallischen Stützring (12) mit U-förmigen Querschnitt verbunden ist, der den Außenlaufring (2) gegenüber dem Innenlaufring (3) zentriert und gleitgelagert abstützt, wobei der metallische Stützring (12) an seiner Basis mit einer Anzahl von axialen Öffnungen (13) versehen ist und der Kunststoffkäfig (4) an seinem dem metallischen Stützring (12) benachbarten Bord (8) mit einer entsprechenden Anzahl von axial vorragenden Zapfen (10) versehen ist die in die Öffnungen (13) einragen,
**dadurch gekennzeichnet,** daß
- nur ein seitlicher, metallischer Stützring (12) mit dem Kunststoffkäfig (4) verbunden ist,
- die in die Öffnungen (13) einragenden Zapfen (10) durch Einwirken eines Ultraschallschweißkopfes oder dergleichen niedergeschmolzen werden und
- die Öffnungen (13) in der Basis des metallischen Stützringes (12 bzw. 12') entweder mit einer Ansenkung (17) oder einer vorgelagerten Einprägung (18) versehen sind.

## Claims

1. Roller or sprag one-way clutch having a cage (4) of plastics material, which is axially secured by radial locking lugs (9) provided on a rim (7) engaging in a corresponding locking groove (11) in an outer bearing race (2) and is connected on one side to a U-section metal supporting ring (12) which centres the outer bearing race (2) and provides it with sliding bearing support relative to the inner bearing race (3), the metal supporting ring (12) being provided on its base with a number of axial openings (13) and the plastics material cage (4) being provided on its rim (8) adjacent to the metallic supporting ring (12) with a corresponding number of axially projecting pegs which project into the openings (9),
characterised in that
- only one lateral, metal supporting ring (12) is connected to the plastics material cage (4),
- the pegs (10) projecting into the openings (13) are melted down by means of an ultrasonic welding head or the like and
- the openings (13) in the base of the metal supporting ring (12 or 12') are either countersunk (17) or provided with a pre-positioned impression (18).

## Revendications

1. Roue libre à galets ou corps de blocage, avec une cage en matière plastique (4), qui est fixée en position axiale, par l'intermédiaire d'ergots de crantage radiaux (9) prévus sur un collet (7), dans une rainure de crantage correspondante (11) prévue dans une bague de roulement extérieure (2), et qui est assemblée sur un côté à une bague de soutien métallique (12) à section en U, qui centre la bague de roulement extérieure (2) par rapport à la bague de roulement intérieure (3) et la soutient en montage glissant, la bague de soutien métallique (12) étant pourvue sur sa base d'un certain nombre d'ouvertures axiales (13) et la cage en matière plastique (4) étant pourvue, sur son collet (8) voisin de la bague de soutien métallique (12) d'un nombre correspondant de tenons (10) dépassant axialement, qui s'engagent dans les ouvertures (13),
**caractérisée** en ce que
- une seule bague de soutien métallique (12), latérale, est assemblée à la cage en matière plastique (4),
- les tenons (10) s'engageant dans les ouvertures (13) sont rabattus par fusion sous l'action d'une tête de soudage aux ultrasons ou analogue, et
- les ouvertures (13) prévues dans la base de la bague de soutien métallique (12 ou 12') sont pourvues, soit d'un chanfreinage (17), soit d'une région repoussée (18) précédant l'ouverture.
